# FASCICULE DE BREVET EUROPEEN

(11) **EP 4 189 338 B1**
(45) Date de publication et mention de la délivrance du brevet: **06.08.2025**
(21) Numéro de dépôt: 21759332.6
(22) Date de dépôt: 28.07.2021
(51) Int. Cl.: G01H 1/00, G01H 3/10

(54) **PROCÉDÉ DE SURVEILLANCE DE VIBRATIONS**
VERFAHREN ZUR ÜBERWACHUNG VON SCHWINGUNGEN
METHOD FOR MONITORING VIBRATIONS

(30) Priorité: 31.07.2020 FR 2008187
(43) Date de publication de la demande: 07.06.2023
(73) Titulaire: UBY, 75008 Paris (FR)
(72) Inventeur: LABOUREAU, Sebastien, 78120 RAMBOUILLET (FR); MAREUGE, Laurent, 78160 MARLY LE ROI (FR); SURMONT, Antoine Thierry Charles, 78960 VOISINS-LE-BRETONNEUX (FR)
(74) Mandataire: Regimbeau
(86) Numéro de dépôt international: PCT/FR2021/051413
(87) Numéro de publication internationale: WO 2022/023673

(56) Documents cités:
- WO-A1-2015/086959
- NL-B1- 2 022 301
- NL-B1- 2 022 301
- US-A1- 2015 160 070
- US-A1- 2018 149 516
- US-A1- 2018 180 465
- US-A1- 2019 064 034

## Description

### DOMAINE DE L'INVENTION

La présente invention concerne le domaine de la surveillance de vibrations, en particulier de vibrations produites aux abords de zone d'opérations telles que des chantiers de construction ou des sites industriels. Plus précisément, l'invention concerne un procédé de surveillance de vibrations aux abords d'une zone d'opérations à l'aide d'un capteur de surveillance de vibrations autonome.

### ETAT DE LA TECHNIQUE

L'attention croissante portée aux nuisances, notamment à celles générées par les zones d'opérations, telles que les chantiers de constructions ou les sites d'opérations industrielles en zone urbaine, nécessite le développement de nouveaux outils permettant la détection et le contrôle de ces nuisances.

En particulier, les nuisances vibratoires aux abords de ces zones d'opérations doivent être mesurées et leur évolution doit être surveillée. En outre, des alertes doivent être générées lorsque des dépassements de certains seuils vibratoires sont constatés.

Les documents KR10-2062161 et WO 2012/156507 A2 décrivent des dispositifs portables pour surveiller les niveaux de bruit et de vibration à l'aide d'un capteur de vibration comprenant une batterie. Ces dispositifs sont adaptés pour communiquer par transmission radio ou Bluetooth.

Néanmoins, l'autonomie de ces dispositifs est limitée à quelques semaines au maximum. Cette autonomie n'est pas suffisante pour certaines applications envisagées. En particulier, sur un chantier durant plusieurs mois ou une surveillance en continu sur plusieurs années d'un site industriel, ces dispositifs doivent être remplacés ou rechargés à intervalles réguliers en raison de leur autonomie limitée, ce qui entraîne des coûts et un nombre d'opération de maintenance significatifs.

Le document EP 2 873 492 A1 décrit un dosimètre portable configuré pour mesurer des vibrations émises par une machine-outil. Le dosimètre se porte au poignet de l'utilisateur et renseigne l'utilisateur sur le niveau de vibrations qu'il reçoit lors de l'utilisation de la machine-outil. Néanmoins, les communications entre les éléments du système sont réalisées exclusivement par des réseaux très courte portée. Par conséquent, les éléments du système doivent être positionnés à proximité les uns des autres pour que le dosimètre puisse assurer la surveillance des vibrations. En outre, l'autonomie du dosimètre est également limitée à environ quelques semaines.

Le document US 2018/180465 A1 décrit un procédé de surveillance de vibrations au moyen d'un capteur vibratoire et d'une unité de transmission capable de transmettre des données et des alertes à un serveur. Néanmoins, l'alerte n'est pas transmise assez rapidement en cas d'événement détecté. Le document US 2015/160070 A1 décrit un procédé pour déterminer un état de fonctionnement d'un moteur à partir d'une détection de vibrations. Le document NL 2 022 301 B1 décrit un procédé de détection des vibrations au moyen d'un capteur de vibrations et d'une unité de transmission capable de transmettre des données issues des vibrations détectées par le capteur.

### EXPOSE DE L'INVENTION

Un objectif de l'invention est de proposer un procédé de surveillance des vibrations aux abords d'une zone d'opérations qui permette une surveillance améliorée à l'aide d'un dispositif présentant une maintenance facilitée par rapport à l'art antérieur.

Un autre objectif de l'invention est de proposer un capteur de surveillance de vibrations présentant une longue autonomie.

Pour cela, l'invention décrit un procédé de surveillance de vibrations produites par une zone d'opérations, le procédé étant mis en œuvre au moyen d'un capteur de surveillance de vibrations comprenant un capteur vibratoire, une batterie, une unité de traitement et une unité de transmission, le procédé comprenant les étapes suivantes :
E1 : division d'une plage de fréquence de fonctionnement en plusieurs sous-plages de fréquence ;
E2 : pour chaque sous-plage de fréquence, définition d'un seuil vibratoire associé ;
E3 : acquisition en continu de mesures de vibrations produites par la zone d'opérations, au moyen du capteur vibratoire ;
E4 : transmission périodique, à une période d'envoi, de données vibratoires issues des mesures de vibrations, les données vibratoires étant transmises à un serveur distant via un réseau LPWAN, au moyen de l'unité de transmission ;
E5 : détection d'un événement vibratoire correspondant à au moins un dépassement d'un seuil vibratoire dans la sous-plage de fréquence associée, au moyen de l'unité de traitement ;
E6 : lorsqu'un événement vibratoire est détecté, transmission d'une alerte au serveur distant via le réseau LPWAN, au moyen de l'unité de transmission.

L'unité de transmission est une unité de transmission de technologie longue portée basse consommation de type LPWAN (« Low-Power Wide Area Network »), ladite unité de transmission comprenant un module émetteur permettant des transmissions par le biais d'un réseau LPWAN de type LoRaWan, SigFox ou narrowband-IOT. L'alerte est transmise périodiquement, à chaque période d'alerte, la période d'alerte étant plus courte que la période d'envoi.

Certaines caractéristiques préférées mais non limitatives du procédé de surveillance de vibrations décrit ci-dessus sont les suivantes, prises individuellement ou en combinaison :
- la division de la plage de fréquence de fonctionnement en plusieurs sous-plages de fréquences est réalisée par tiers d'octave ;
- les sous-plages de fréquence présentent des longueurs d'intervalle différentes les unes des autres ;
- la plage de fréquence de fonctionnement est divisée en un nombre de plages de fréquences de transmission inférieur à 10 ;
- la plage de fréquence de fonctionnement est comprise entre 1 Hz et 500 Hz ;
- le procédé comprend en outre une étape d'intégration, sur au moins une période d'intégration, des mesures de vibrations acquises lors de l'étape d'acquisition E3, l'au moins une période d'intégration étant plus courte que la période d'envoi, les données vibratoires transmises lors de l'étape E4 correspondant à un ensemble des mesures de vibrations intégrées pendant la période d'envoi ;
- l'étape de transmission d'une alerte E6 comprend la transmission de données d'alerte, les données d'alerte comprenant la fréquence pour laquelle le seuil vibratoire a été dépassé, une donnée vibratoire d'alerte, et une durée de dépassement du seuil vibratoire ;
- le procédé comprend en outre les étapes suivantes :
   E7 : acquisition en continu de mesures sonores produites par une zone d'opérations ;
   E8 : détection d'un événement sonore correspondant à une signature sonore prédéterminée ;
   E9 : corrélation d'un événement vibratoire détecté avec un événement sonore détecté.

Selon un deuxième aspect, l'invention décrit également un capteur de surveillance de vibrations produites par une zone d'opérations adapté pour mettre en œuvre un procédé selon le premier aspect, le capteur de surveillance comprenant :
- un capteur vibratoire adapté pour acquérir en continu des mesures de vibrations produites par une zone d'opérations ;
- une batterie ;
- une unité de traitement adaptée pour déterminer des données vibratoires à partir des mesures de vibrations, et pour détecter un événement vibratoire correspondant à un dépassement d'un seuil vibratoire défini dans une plage de fréquence associée ; et
- une unité de transmission de technologie longue portée basse consommation de type LPWAN (« Low-Power Wide Area Network »), ladite unité de transmission comprenant un module émetteur permettant des transmissions par le biais d'un réseau LPWAN, ladite unité de transmission étant adaptée pour transmettre des données à un serveur distant via un réseau LPWAN.

Le capteur vibratoire peut comprendre un accéléromètre tri-axes.

La batterie peut comprendre une pile lithium-ion.

Le capteur de surveillance peut comprendre en outre un boîtier en polycarbonate étanche. Le capteur vibratoire, la batterie, l'unité de traitement et l'unité de transmission peuvent être intégrées dans le boîtier.

Selon un troisième aspect, l'invention décrit également un système de surveillance de vibrations produites par une zone d'opérations, comprenant un capteur de surveillance de vibrations selon le deuxième aspect, et un serveur distant.

Le système de surveillance de vibrations produites par une zone d'opérations peut comprendre en outre des moyens de signalement comprenant un terminal mobile configuré pour transmettre un signalement d'un évènement vibratoire par un utilisateur du terminal mobile lorsque l'utilisateur se trouve à une distance inférieure à un seuil donné de la zone d'opérations.

Le système de surveillance de vibrations produites par une zone d'opérations peut comprendre en outre des moyens de notification configurés pour notifier un évènement vibratoire lorsque le capteur de surveillance de vibrations détecte un évènement vibratoire, et/ou lorsque les moyens de signalement transmettent un signalement d'un évènement vibratoire.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
La figure 1 illustre de manière schématique une architecture d'un capteur de surveillance de vibrations selon un mode de réalisation de l'invention.
La figure 2 est un schéma bloc représentant différentes étapes d'un procédé de surveillance de vibrations selon un mode de réalisation de l'invention.

### DESCRIPTION DETAILLEE DE L'INVENTION

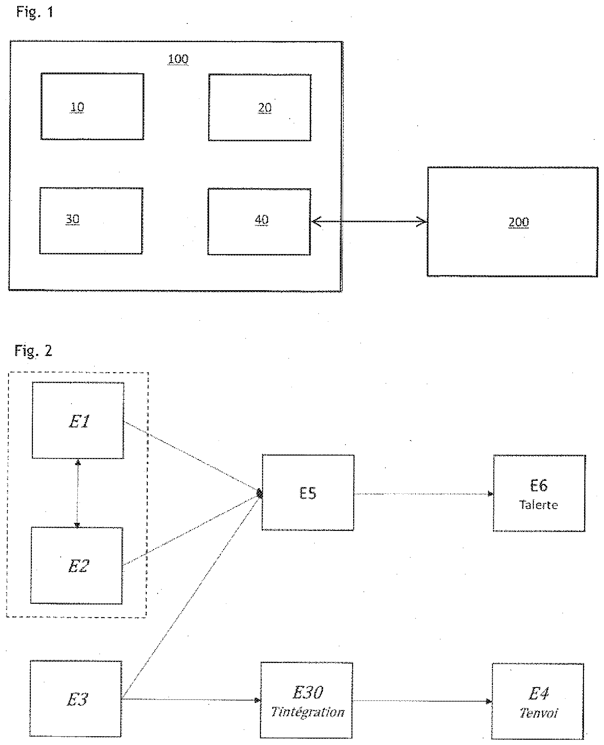

Un procédé de surveillance de vibrations produites par une zone d'opérations est illustré à titre d'exemple non limitatif en figure 2. Le procédé est mis en œuvre au moyen d'un capteur de surveillance de vibrations comprenant un capteur vibratoire 10, une batterie 20, une unité de traitement 30 et une unité de transmission 40.

L'unité de transmission est une unité de transmission de technologie longue portée basse consommation de type LPWAN (« Low-Power Wide Area Network »), ladite unité de transmission comprenant un module émetteur permettant des transmissions par le biais d'un réseau LPWAN de type LoRaWan, SigFox ou narrowband-IOT.

Le procédé comprend les étapes suivantes :
E1 : division d'une plage de fréquence de fonctionnement en plusieurs sous-plages de fréquence ;
E2 : pour chaque sous-plage de fréquence, définition d'un seuil vibratoire associé ;
E3 : acquisition en continu de mesures de vibrations produites par la zone d'opérations, au moyen du capteur vibratoire 10 ;
E4 : transmission périodique, à une période d'envoi Tenvoi, de données vibratoires issues des mesures de vibrations, les données vibratoires étant transmises à un serveur distant 200 via un réseau LPWAN, au moyen de l'unité de transmission 40 ;
E5 : détection d'un événement vibratoire correspondant à au moins un dépassement d'un seuil vibratoire dans la sous-plage de fréquence associée, au moyen de l'unité de traitement 30 ;
E6 : lorsqu'un événement vibratoire est détecté, transmission d'une alerte au serveur distant 200 via le réseau LPWAN, au moyen de l'unité de transmission 40.

L'alerte est transmise périodiquement, à chaque période d'alerte, la période d'alerte étant plus courte que la période d'envoi.

Le terme de zone d'opérations désigne toute zone dans ou à proximité de laquelle des nuisances vibratoires sont susceptibles d'être générées, en particulier du fait d'installations ou d'opérations susceptibles de générer des vibrations. Par exemple, une zone d'opérations peut désigner un chantier de construction, ou encore un site industriel.

Le procédé décrit ci-dessus permet d'augmenter considérablement l'autonomie du capteur de surveillance des vibrations, et ainsi d'augmenter le temps entre deux opérations de maintenance, tout en conduisant à une surveillance fiable et précise au cours du temps des vibrations et de leur évolution. Le procédé décrit permet en outre une bonne flexibilité dans la sensibilité de la détection d'un événement vibratoire et de la surveillance des vibrations, par l'adaptation possible de la définition des seuils vibratoires, des sous-plages de fréquence, de la période d'envoi, etc.

L'acquisition des mesures de vibrations est réalisée en continu lors de l'étape E3. Par conséquent, les données vibratoires transmises au serveur distant 200 lors de l'étape E4 reflètent le niveau de vibrations produit par la zone d'opérations à chaque instant et l'évolution de ce niveau de vibrations au cours du temps.

Les données vibratoires issues des mesures de vibrations sont transmises lors de l'étape E4 de façon périodique. En d'autres termes, les données vibratoires ne sont pas transmises en continu, mais à chaque période d'envoi Tenvoi. Cette transmission périodique permet de préserver l'autonomie du capteur de surveillance, en particulier de sa batterie 20. La période d'envoi Tenvoi peut être définie indépendamment des critères de détection des événements vibratoires. Ainsi, les données vibratoires peuvent être transmises régulièrement en vue d'assurer une surveillance de fond des vibrations produites par la zone d'opérations, tout en préservant l'autonomie du capteur de surveillance. Par conséquent, le procédé assure une surveillance du niveau de vibrations et de leur évolution y compris lorsqu'aucun événement vibratoire n'est détecté, c'est-à-dire lorsque les vibrations restent en-dessous des seuils vibratoires acceptables.

En parallèle de l'envoi périodique de données vibratoires, le procédé comprend une étape E6 de transmission d'une alerte lorsqu'un événement vibratoire est détecté. La détection d'un événement vibratoire est réalisée à l'étape E5 en fonction de la division de la plage de fréquence de fonctionnement en sous-plages de fréquence. Cette division réalisée à l'étape E1 permet de définir les événements vibratoires en fonction de seuils vibratoires qui sont associés aux sous-plages de fréquence. Les seuils vibratoires sont donc définis à l'étape E2 en fonction de la sensibilité de détection d'événement souhaitée, pour une sous-plage de fréquence plus réduite que la plage de fréquence de fonctionnement.

La division de la plage de fréquence de fonctionnement en différentes sous-plages de fréquence à l'étape E1 permet ainsi d'adapter finement la sensibilité de la détection des événements vibratoires, par exemple en fonction de la fréquence des vibrations mesurées, ou encore du nombre de transmissions d'alerte souhaité, ce nombre étant corrélé à l'autonomie du dispositif.

Ainsi, plus le seuil vibratoire défini sur une sous-plage de fréquence associée est faible, plus le niveau vibratoire conduisant à la détection d'un événement vibratoire est faible. Le nombre d'événements vibratoires détectés lors de l'étape E5 et susceptibles de donner lieu à une alerte augmente en conséquence.

Le procédé décrit permet ainsi d'alerter lors de l'atteinte ou du dépassement des seuils vibratoires, tout en évitant les transmissions superflues d'alerte coûteuses en énergie. L'autonomie du capteur de surveillance en est donc améliorée.

La transmission des données lors des étapes E4 et E6 du procédé de surveillance est une transmission à longue distance et à faible consommation énergétique de données, réalisée grâce à une technologie longue portée basse consommation de type réseau LPWAN (« Low-Power Wide Area Network »). L'utilisation d'un réseau LPWAN permet de diminuer la consommation d'énergie requise pour les transmissions de données, et ainsi d'augmenter davantage l'autonomie du capteur de surveillance.

Un réseau LPWAN est caractérisé par une longue portée, c'est-à-dire une portée de plusieurs centaines de mètres, classiquement comprise entre 1 km et 50 km. Cette longue portée est obtenue notamment grâce à l'utilisation de bandes de fréquences spécifiques présentant une largeur de bande de quelques KHz, telles que la bande de fréquence dite "Sub-1GHz" de 868 MHz en Europe et 915 MHz aux Etats-Unis, ou la bande de fréquence comprise entre 700-900 MHz. Cette longue portée est en outre obtenue grâce à l'utilisation de débits de données très faibles, par exemple compris entre 100 bits/s et 1 Mbit/s, en général de l'ordre de quelques kbits/s, et grâce à l'utilisation de classes de modulation spécifiques, telles que la modulation à bande étroite et la modulation à étalement de spectre.

Un réseau LPWAN est également caractérisé par une faible consommation d'énergie, qui permet un fonctionnement sur pile ou batterie de plusieurs années. Cette faible consommation d'énergie est obtenue en particulier grâce à l'utilisation d'une topologie en étoile, grâce à l'utilisation de couches MAC de types spécifiques, telles que la couche ALOHA, pour une méthode d'accès au support simplifiée, et grâce aux faibles débits de données.

Les technologies LoRa, SigFox, LTE-m, ou narrowband-IOT, sont des exemples bien connus de types de réseaux LPWAN. Les réseaux de type GSM, WLAN, Bluetooh ou Wi-Fi, ne sont pas des réseaux LPWAN.

Les débits faibles des réseaux LPWAN nécessitent une sélection de l'information à envoyer et un encodage spécifique de cette information. La division de la plage de fréquence de fonctionnement en plusieurs sous-plages de fréquence spécifiques, par exemple par tiers d'octave, permet de faire entrer les données obtenues dans les débits d'un réseau LPWAN.

Ainsi, grâce aux transmissions par le biais d'un réseau LPWAN, une batterie 20 standard, telle qu'un pack batterie 3.6V, peut fournir au de surveillance de vibrations une autonomie de l'ordre de quelques mois, par exemple de 12 à 24 mois, tout en effectuant des mesures de vibrations de façon régulière, par exemple toutes les 5 à 20 minutes.

Par conséquent, le procédé décrit ci-dessus conduit à une surveillance des vibrations produites sur une zone d'opérations qui est représentative des niveaux de vibrations observés à chaque instant au niveau de ou à proximité de la zone d'opérations, tout en garantissant une autonomie améliorée du capteur de surveillance.

Ainsi, la surveillance est réalisée de façon fluide et précise, la maintenance du capteur de surveillance est facilitée et les coûts associés sont diminués. En particulier, la batterie 20 du capteur de surveillance ne doit être remplacée ou rechargée qu'à des intervalles espacés. Typiquement, un tel procédé peut permettre de surveiller les vibrations d'une zone d'opérations pendant une durée de l'ordre de plusieurs mois, voire supérieure à une année, sans avoir à changer ou à recharger la batterie 20 du capteur de surveillance. Aucune maintenance n'est ainsi nécessaire sur la durée de vie de la zone d'opérations lorsque celle-ci est inférieure à la durée d'autonomie du capteur de surveillance, ce qui permet de réduire les coûts en conséquence.

À chaque sous-plage de fréquence est associé un seuil vibratoire, défini à l'étape E2. Les seuils vibratoires peuvent être définis en fonction de niveaux de vibrations jugés acceptables par exemple en fonction du type de zone d'opérations, de la durée des opérations, des horaires d'activité des opérations, de l'environnement urbain à proximité de la zone d'opérations, etc.

La plage de fréquence de fonctionnement peut correspondre à une gamme de fréquences comprenant un ensemble de fréquences qui sont inférieures à une fréquence maximale Fmax. La fréquence maximale Fmax peut correspondre à une fréquence maximale de vibrations mesurée par le capteur vibratoire 10. Une telle plage de fonctionnement bornée par une fréquence maximale permet de réduire le volume de données vibratoires à transmettre aux seules plages de fréquences qui nécessitent une supervision, et ainsi à ne pas transmettre de données vibratoires sur les plages de fréquences qui ne nécessitent pas de supervision. La batterie et les performances du capteur de surveillance sont ainsi améliorées.

Par exemple, la fréquence maxime Fmax peut être égale à 500 Hz. La plage de fréquence de fonctionnement peut être comprise entre 1 Hz et 500 Hz, c'est-à-dire couvrir un spectre allant de 1 Hz jusqu'à 500 Hz.

La plage de fréquence de fonctionnement peut être divisée en un certain nombre de sous-plages de fréquences utilisées pour la transmission périodique des données vibratoires lors de l'étape E4, et/ou pour la transmission d'alertes lors de l'étape E6. L'étendue, le nombre et les gammes des sous-plages de fréquence associées aux seuils vibratoires sont configurables.

Les sous-plages de fréquence peuvent présenter des longueurs d'intervalle différentes les unes des autres. En d'autres termes, une sous-plage de fréquence peut présenter une taille différente d'une autre sous-plage de fréquence.

L'intégralité de la plage de fonctionnement peut être divisée en sous-plages de fréquence associées chacune à un seuil vibratoire. Plusieurs sous-plages de fréquence correspondant à des gammes de fréquence différentes peuvent correspondre à un même seuil vibratoire.

Dans un premier exemple de réalisation, la division de la plage de fréquence de fonctionnement en plusieurs sous-plages de fréquences peut être réalisée par tiers d'octave. Par tiers d'octave, on comprendra ici une plage de fréquences définie entre une fréquence inférieure et une fréquence supérieure, la fréquence supérieure correspondant à la fréquence inférieure de la plage de fréquences multipliée par la racine sixième de deux. Ainsi, les sous-plages de fréquence sont des bandes à largeur relative constante *Δf* / *f.*

La division lors de l'étape E1 de la plage de fréquence de fonctionnement en plusieurs sous-plages de fréquence par tiers d'octave permet d'optimiser à la fois le nombre de transmissions et la précision de la détection d'événements. Cette division optimise donc la qualité de la surveillance ainsi que l'autonomie du capteur de surveillance.

Dans un deuxième exemple de réalisation, la division de la plage de fréquence de fonctionnement en plusieurs sous-plages de fréquences peut être réalisée de façon personnalisée.

La plage de fréquence de fonctionnement est alors divisée en un nombre Pfréquence de sous-plages de fréquence. Le nombre Pfréquence de sous-plages de fréquences est de préférence inférieur ou égal à 10, par exemple égal à 3.

Pour une plage de fréquence de fonctionnement comprise entre 1 Hz et 100 Hz et un nombre Pfréquence de 3, la plage de fréquence de fonctionnement peut être divisée en trois sous-plages de fréquences, qui peuvent être les suivantes : une première sous-plage de fréquences allant de 1 Hz à 8 Hz, une deuxième sous-plage de fréquences allant de 8 Hz à 30 Hz, et une troisième sous-plage de fréquences allant de 30 Hz à 100 Hz. Ces trois sous-plages de fréquence peuvent correspondre à des normes. La plage de fréquence de 1 Hz à 8 Hz peut permettre la surveillance de vibrations susceptibles d'être représentatives de problèmes structurels, la plage de 8 Hz à 30 Hz peut permettre la surveillance de vibrations perceptibles susceptibles d'impacter le confort à proximité de la zone d'opérations, et la plage de 30 Hz à 100 Hz peut permettre la surveillance de vibrations dont les fréquences correspondent à une perception auditive des vibrations.

Un seuil vibratoire peut correspondre à un seuil d'accélération vibratoire ou à un seuil de vitesse vibratoire, plus particulièrement à une valeur moyenne quadratique d'accélération vibratoire ou de vitesse vibratoire.

Dans le premier exemple de réalisation, l'accélération vibratoire ou la vitesse vibratoire peut être déterminée sur chaque bande de tiers d'octave, c'est-à-dire sur chaque sous-plage de fréquence, dans lesquelles la plage de fréquence de fonctionnement est divisée. Dans le deuxième exemple de réalisation, la vitesse vibratoire peut être déterminée sur chaque sous-plage de fréquence personnalisée, c'est-à-dire pour chacune des Pfréquence sous-plages de fréquences dans lesquelles la plage de fréquence de fonctionnement est divisée.

La valeur moyenne quadratique de vitesse vibratoire formant le seuil vibratoire peut être comprise, quelle que soit la sous-plage de fréquence associée au seuil vibratoire, entre 0,005 mm/s et 2 mm/s.

A titre d'exemple non limitatif, le tableau ci-dessous illustre des exemples de seuils vibratoires, chaque seuil vibratoire étant exprimé en tant que valeur moyenne quadratique de vitesse vibratoire (en mm/s). Les seuils vibratoires sont associés à des sous-plages de fréquence (gamme de fréquence, exprimée en Hertz). Les sous-plages de fréquence correspondent à des bandes de tiers d'octave d'une plage de fréquence de fonctionnement comprise entre 1 Hz et 500 Hz.

**[Table 1]**

| Sous-plage de fréquence (Hz) | Seuil vibratoire (mm/s) |
|---|---|
| 1 | 1.59 |
| 1.25 | 1.13 |
| 1.6 | 0.79 |
| 2 | 0.56 |
| 2.5 | 0.4 |
| 3.15 | 0.29 |
| 4 | 0.2 |
| 5 | 0.16 |
| 6.3 | 0.13 |
| 8 | 0.1 |
| 10 | 0.1 |
| 12.5 | 0.1 |
| 16 | 0.1 |
| 20 | 0.1 |
| 25 | 0.1 |
| 31.5 | 0.1 |
| 40 | 0.09 |
| 50 | 0.08 |
| 63 | 0.079 |
| 80 | 0.059 |
| 100 | 0.039 |
| 125 | 0.019 |
| 160 | 0.015 |
| 200 | 0.011 |
| 250 | 0.008 |
| 315 | 0.007 |
| 400 | 0.006 |
| 500 | 0.005 |

Les données vibratoires transmises périodiquement lors de l'étape E4 peuvent correspondre aux mesures de vibrations acquises par le capteur vibratoire 10 lors de l'étape E3, le cas échéant après envoi et traitement de ces mesures de vibrations par l'unité de traitement 30.

Les données vibratoires peuvent comprendre, pour chaque sous-plage de fréquence et le cas échéant pour chaque axe sur lequel les vibrations sont mesurées, des données d'accélération par exemple :
- une accélération moyenne sur la période d'envoi Tenvoi, qui correspond à une moyenne arithmétique ou au maximum de moyennes quadratiques de l'accélération sur la période d'envoi Tenvoi ; et/ou
- une accélération maximale sur la période d'envoi Tenvoi.

En alternative ou en outre, les données vibratoires peuvent comprendre des données de vitesse, la vitesse étant obtenue par intégration, via un filtre intégrateur, de l'accélération sur la période d'envoi Tenvoi, selon une période d'intégration Tintégration définie ci-dessous, par exemple :
- une vitesse moyenne sur la période d'envoi Tenvoi, qui correspond à une moyenne arithmétique ou au maximum de moyennes quadratiques de la vitesse sur la période d'envoi Tenvoi ; et/ou
- une vitesse maximale sur la période d'envoi Tenvoi.

En particulier, lorsque la division est réalisée par tiers d'octave selon le premier exemple de réalisation, les données vibratoires peuvent comprendre des données d'accélération et/ou des données de vitesse. Le signal correspondant aux mesures de vibrations du capteur de vibrations est découpé par tiers d'octave à l'aide de filtres passe-bande. Une moyenne, par exemple une moyenne quadratique, est appliquée sur les points du signal pour chacune des sous-plages de fréquence ainsi définies.

Lorsque la division est réalisée de façon personnalisée selon le deuxième exemple de réalisation, les données vibratoires peuvent comprendre des données de vitesse. Le signal correspondant aux mesures de vibrations du capteur de vibrations est découpé de façon personnalisée à l'aide de filtres passe-bande. Une transformée de Fourier peut être appliquée sur les points du signal pour chacune des périodes d'intégration Tintégration. Une moyenne, par exemple une moyenne quadratique, est appliquée sur les points du signal obtenus, le cas échéant après transformée de Fourier, pour chacune des sous-plages de fréquence personnalisées.

Chacun des exemples de réalisation décrits ci-dessus permet de traiter et de sélectionner l'information à envoyer de sorte à permettre une surveillance en continu des vibrations, notamment en permettant de transmettre des données vibratoires compatibles des faibles débits des réseaux LPWAN.

La période d'envoi Tenvoi peut être comprise entre 5 minutes et 60 minutes, par exemple comprise entre 10 minutes et 30 minutes, par exemple être égale à 15 minutes. Dans ce dernier cas, les données vibratoires issues des mesures de vibrations sont transmises lors de l'étape E4 par l'unité de transmission 40 toutes les 15 minutes.

Le réseau LPWAN par lequel les données vibratoires et le cas échéant les alertes sont transmises est un réseau de type LoRaWan, SigFox, LTE-m, ou narrowband-IOT. Ainsi, la transmission des données vibratoires et/ou des alertes lors des étapes E4 et E6 peut être réalisée sur une longue distance, par exemple de l'ordre de plusieurs kilomètres, voire supérieure à dix kilomètres, tout en préservant l'autonomie du dispositif. Le protocole de transmission des données vibratoires et/ou des alertes peut correspondre à un protocole de communication LoRa public ou privé.

La transmission de l'alerte lors de l'étape E6 est réalisée périodiquement, à chaque période d'alerte Talerte durant laquelle au moins un événement vibratoire est détecté. L'unité de transmission 40 est configurée pour transmettre les alertes au serveur distant 200 à chaque période d'alerte Talerte au cours de laquelle un événement vibratoire est détecté. Ainsi, une fois un événement vibratoire détecté à l'étape E5, l'alerte est transmise au plus tard après une durée correspondant à la période d'alerte Talerte. Par ailleurs, la détection d'un événement vibratoire, même persistant dans le temps, n'entraîne pas une multiplication des alertes, une seule alerte étant envoyée par période d'alerte Talerte.

La transmission périodique des alertes correspondant aux événements vibratoires lors de l'étape E6 permet d'économiser encore l'autonomie du capteur de surveillance. En effet, les événements vibratoires ne sont pas transmis en continu dès leur détection et à chaque instant où ils sont détectés, mais seulement à chaque période d'alerte Talerte, et uniquement dans le cas où un événement vibratoire a effectivement été détecté lors de l'étape E5.

La période d'alerte Talerte est plus courte que la période d'envoi Tenvoi. Ainsi, lorsqu'un événement vibratoire est détecté lors de l'étape E3, l'alerte est transmise rapidement au serveur distant 200, dans un intervalle de temps plus court que celui de l'envoi des données vibratoires qui correspondent à une surveillance de fond du niveau de vibrations de la zone d'opérations. L'utilisateur peut ainsi être rapidement alerté en cas d'atteinte ou de dépassement d'un seuil vibratoire. La période d'alerte Talerte peut être définie en fonction d'exigences de rapidité de transmission d'une alerte représentative d'un événement vibratoire.

La période d'alerte Talerte peut être comprise entre 30 secondes et 60 minutes, par exemple comprise entre 1 minute et 10 minutes, par exemple être égale à 2 minutes.

L'alerte peut être transmise périodiquement lors de l'étape E6 tant que l'événement vibratoire est détecté. A chaque période d'alerte Talerte, une alerte est ainsi transmise. Lorsque la durée de l'événement vibratoire dépasse un temps maximal, l'alerte peut ne plus être envoyée. Ainsi, la survenance d'un événement vibratoire pendant une longue durée n'entraîne pas une multiplication des alertes, et l'autonomie du capteur de surveillance est ainsi préservée.

Le temps maximal peut être compris entre 10 minutes et 5 heures, par exemple entre 30 minutes et 2 heures, par exemple être égal à 1 heure.

Par exemple, lorsque la période d'alerte Talerte est de 2 minutes et que le temps maximal est d'1 heure, l'alerte lors de la détection d'un événement vibratoire est transmise au plus tard 2 minutes après la détection de l'événement vibratoire. L'alerte est ensuite transmise périodiquement toutes les 2 minutes pendant toute la durée au cours de laquelle l'événement est détecté. Au-delà d'une heure, c'est-à-dire de 30 alertes transmises, l'alerte n'est plus envoyée, même si l'événement vibratoire continue à être détecté.

Le procédé peut comprendre en outre une étape d'intégration E30, sur au moins une période d'intégration Tintégration, des mesures de vibrations acquises lors de l'étape d'acquisition E3. L'au moins une période d'intégration Tintégration est plus courte que la période d'envoi Tenvoi. Les données vibratoires transmises lors de l'étape E4 correspondent à un ensemble des mesures de vibrations intégrées pendant la période d'envoi Tenvoi.

En d'autres termes, les mesures de vibrations sont acquises en continu par le capteur vibratoire 10 à l'étape E3. Une période d'envoi Tenvoi peut être découpée en plusieurs périodes d'intégration Tintégration. L'étape d'intégration E30 des mesures de vibrations pour en déduire les données vibratoires à transmettre peut être réalisée par l'unité de traitement 30 du capteur de surveillance.

Une donnée vibratoire peut correspondre sensiblement à une valeur moyenne des mesures de vibration acquises sur la période d'intégration Tintégration. L'intégration des mesures de vibrations est répétée pour chaque période d'intégration Tintégration de la période d'envoi Tenvoi. L'ensemble comprenant toutes les valeur moyennes des mesures de vibrations sur chaque période d'intégration Tintégration sont transmises lors de l'étape E4, à chaque période d'envoi Tenvoi. Par exemple, les mesures de vibrations acquises par le capteur vibratoire peuvent correspondre à des accélérations, et les données vibratoires une fois intégrées correspondre à des vitesses.

L'intégration des mesures de vibrations acquises sur des périodes d'intégration Tintégration permet de réduire le flux de données vibratoires transmises par rapport à une transmission de l'intégralité des mesures de vibrations, tout en continuant à assurer une surveillance détaillée des vibrations. La période d'intégration Tintégration peut être choisie en fonction de la précision de la surveillance des vibrations et de l'autonomie du capteur de surveillance souhaitées. Plus la période d'intégration Tintégration est faible, plus la surveillance est proche d'une surveillance en continu à tout instant. Plus la période d'intégration Tintégration est élevée, plus la quantité de données vibratoires à transmettre est réduite, donc plus l'autonomie du capteur de surveillance est augmentée.

La période d'intégration Tintégration peut être comprise entre 0,5 seconde et 1 minute, par exemple comprise entre 1 seconde et 20 secondes, par exemple inférieure ou égale à 5 secondes, par exemple être égale à 10 secondes. Pour une période d'intégration Tintégration de 10 secondes et une période d'envoi Tenvoi de 15 minutes, les mesures de vibrations acquises lors de l'étape E3 sont intégrées par périodes de 10 secondes. Ainsi, au cours des 15 minutes que dure une période d'envoi Tenvoi, un ensemble de 90 mesures de vibrations intégrées est généré. Cet ensemble constitue les données vibratoires, qui sont transmises toutes les 15 minutes au serveur distant 200.

L'étape de détection d'un événement vibratoire E5 peut correspondre à une détection d'un dépassement du seuil vibratoire dans la plage de fréquence associée pendant une durée de dépassement prédéterminée.

Ainsi, il n'est pas tenu compte d'un dépassement d'un seuil vibratoire court, c'est-à-dire qui a lieu pendant une durée inférieure à la durée de dépassement prédéterminée. La durée de dépassement prédéterminée est définie en fonction de la sensibilité de la détection d'événements souhaitée. Une durée de dépassement prédéterminée peut être définie pour chaque sous-plage de fréquence et chaque seuil vibratoire associé. Ainsi, la précision de la détection d'événement est améliorée et est adaptée en fonction de la nuisance vibratoire.

La durée de dépassement prédéterminée peut par exemple correspondre à la période d'intégration Tintégration : ainsi, un dépassement du seuil vibratoire par les données vibratoires pendant une durée de dépassement supérieure à la période d'intégration Tintégration, donc supérieure à quelques secondes, entraîne la détection d'un événement vibratoire.

Le dépassement du seuil vibratoire peut correspondre à un niveau de vibrations strictement supérieur au seuil vibratoire. En variante, le dépassement du seuil vibratoire peut correspondre à un niveau de vibrations sensiblement égal ou supérieur au seuil vibratoire.

L'étape de transmission d'une alerte E6 peut comprendre la transmission de données d'alerte. Les données d'alerte comprennent la fréquence pour laquelle le seuil vibratoire a été dépassé, une donnée vibratoire d'alerte, et une durée de dépassement du seuil vibratoire. Les données d'alerte correspondent ainsi aux données relatives à l'événement détecté qui sont nécessaires au traitement de l'alerte par le serveur distant 200.

La fréquence pour laquelle le seuil vibratoire a été dépassé transmise à l'étape E6 peut correspondre à une fréquence unique, à une pluralité de valeurs de fréquences, ou à une sous-plage de fréquences.

La durée de dépassement correspond au temps durant lequel le niveau de vibrations reste égal ou au-delà du seuil vibratoire pour la sous-plage de fréquence pour laquelle l'événement est détecté. La durée de dépassement peut correspondre à un nombre de périodes d'intégration pendant lequel le seuil vibratoire est atteint ou dépassé, ou strictement dépassé.

La donnée vibratoire d'alerte transmise à l'étape E6 peut correspondre à une accélération ou à une vitesse mesurée, le cas échéant à un ensemble des accélérations ou des vitesses mesurées sur chacun des axes du capteur vibratoire 10, en particulier à une accélération ou à une vitesse mesurée pour la fréquence pour laquelle le seuil vibratoire a été dépassé.

Lorsque plusieurs événements vibratoires sont détectés de manière concomitante, les données d'alerte peuvent être transmises pour chaque événement vibratoire détecté. Les données d'alerte peuvent comprendre en outre au moins une valeur maximale de vitesse sur une sous-plage de fréquence donnée, par exemple quatre valeurs maximales de vitesse sur les sous-plages de fréquence utilisées suivant le mode de fonctionnement.

Les données d'alerte peuvent comprendre en outre un fichier de stockage comprenant une partie ou toutes les mesures acquises par le capteur vibratoire 10 pendant une certaine durée. En particulier, lorsque le capteur vibratoire 10 comprend un accéléromètre tri-axes, les données d'alerte peuvent comprendre un fichier CSV (Comma-separated values) de stockage de 30 secondes de toutes les données de mesures des trois axes de l'accéléromètre. Le fichier de stockage peut être accessible en BLE ou sur un moyen de stockage du capteur de surveillance, tel qu'une carte SD (Secure Digital) de stockage.

Le procédé de surveillance des vibrations peut comprendre en outre les étapes suivantes :
E7 : acquisition en continu de mesures sonores produites par une zone d'opérations ;
E8: détection d'un événement sonore correspondant à une signature sonore prédéterminée ;
E9 : corrélation d'un événement vibratoire détecté avec un événement sonore détecté.

Les mesures sonores peuvent être acquises lors de l'étape E7 par un capteur sonore. La signature sonore prédéterminée peut correspondre à une signature sonore caractéristique du fonctionnement d'une source de nuisances sonores et/ou vibratoires, telle qu'un marteau-piqueur, une foreuse à percussion, etc.

L'événement vibratoire est détecté lors de l'étape E5, et l'événement sonore est détecté lors de l'étape E8. Lorsqu'un événement vibratoire et un événement sonore sont détectés de manière concomitante, c'est-à-dire qu'ils correspondent à des événements ayant lieu sensiblement au même moment, les deux événements peuvent être corrélés, c'est-à-dire qu'ils sont traités comme provenant d'une même source de nuisances et correspondant à une même localisation.

Ces étapes E7, E8 et E9 permettent donc de corréler un événement vibratoire avec un événement sonore, en vue de déterminer la source et la localisation de l'événement vibratoire. Ainsi, il est possible de déterminer si l'événement vibratoire provient d'un marteau-piqueur, d'une foreuse à percussion, etc. Cela permet d'améliorer le suivi des nuisances aux abords de la zone d'opérations.

Le procédé peut comprendre en outre une étape de détection d'un événement de provenance riverains. Un événement de provenance riverains peut être un événement sonore ou vibratoire signalé par un riverain. Par exemple, le procédé peut comprendre une étape de signalement par un riverain d'un événement vibratoire, le signalement étant effectué par le biais de moyens de signalement tels qu'un terminal mobile du riverain, lorsque le riverain se trouve à une distance inférieure à un seuil donné de la zone d'opérations. Le procédé peut comprendre une étape de transmission par le terminal mobile du signalement de l'évènement vibratoire.

Le procédé peut comprendre en outre une étape de notification d'un évènement vibratoire, par le biais de moyens de notification, lorsqu'un événement vibratoire est détecté par le capteur de surveillance de vibrations, et/ou lorsqu'un évènement vibratoire est signalé par un riverain.

Ainsi, le procédé de surveillance de vibrations prend en compte le ressenti des riverains à proximité de la zone d'opérations. Le signalement des gênes perçues par les riverains, corrélés aux données des capteurs, permet d'obtenir des données encore plus précises sur les nuisances potentielles du fait de la zone d'opérations, et d'adapter les opérations en conséquence.

Lorsque plusieurs événements de provenance riverains sont détectés, les événements de provenance riverains respectant des règles de similitude, de proximité géographique et/ou de temporalité peuvent être regroupés.

Lorsqu'un événement vibratoire est détecté avec une temporalité cohérente d'un événement de provenance riverains, l'événement vibratoire et l'événement de provenance riverains peuvent être corrélés. En variante, lorsqu'un événement de provenance riverains est détecté sans qu'un événement vibratoire soit détecté, l'événement de provenance riverains peut être associé à une mesure de vibrations effectuée par le capteur vibratoire 10 de manière concomitante avec l'événement de provenance riverains détecté. Les seuils vibratoires peuvent être adaptés en conséquence, par exemple être abaissés de sorte à conduire à la détection de cet événement vibratoire sur la base des mesures de vibrations associées à l'événement de provenance riverains.

Le procédé peut en outre comprendre une étape de détection préventive correspondant à une détection d'une signature vibratoire prédéterminée. La signature vibratoire peut correspondre à une combinaison de seuils vibratoires associés à des plages de fréquences données et/ou à des durées de dépassement données. La signature vibratoire peut être représentative du fonctionnement d'une source de nuisances donnée. La signature vibratoire prédéterminée peut être considérée comme gênante sur une zone d'opérations donnée, en une heure donnée du jour ou de la nuit, en une certaine période de l'année, etc.

Le procédé peut comprendre, lorsqu'une telle signature vibratoire prédéterminée est détectée, une étape de transmission d'une alerte préventive. La transmission de l'alerte préventive peut être réalisée à un serveur distant 200 via un réseau LPWAN, au moyen de l'unité de transmission 40, et peut être réalisée périodiquement à chaque période d'alerte préventive durant laquelle une alerte préventive est détectée. La période d'alerte préventive peut correspondre à la période d'alerte Talerte.

Ce système d'alerte préventive permet de devancer d'éventuelles plaintes liées aux nuisances, notamment aux nuisances vibratoires, aux abords de la zone d'opérations.

Un capteur de surveillance de vibrations produites par une zone d'opérations adapté pour mettre en œuvre le procédé décrit ci-dessus est illustré à titre d'exemple non limitatif en figure 1, et comprend :
- un capteur vibratoire 10 adapté pour acquérir en continu des mesures de vibrations produites par une zone d'opérations ;
- une batterie 20 ;
- une unité de traitement 30 adaptée pour déterminer des données vibratoires à partir des mesures de vibrations, et pour détecter un événement vibratoire correspondant à un dépassement d'un seuil vibratoire défini dans une plage de fréquence associée ; et
- une unité de transmission 40 adaptée pour transmettre des données à un serveur distant 200 via un réseau LPWAN.

L'unité de traitement 30 du capteur de surveillance peut comprendre un microprocesseur adapté pour détecter un événement vibratoire et le cas échéant générer des données vibratoires à partir des mesures de vibrations acquises lors de l'étape E3.

L'unité de traitement 30 peut comprendre des moyens de transmission de données, telles que les données vibratoires et/ou les données d'alerte, à l'unité de transmission 40.

L'unité de transmission 40 du capteur de surveillance peut être une unité de transmission 40 de technologie LPWAN, comprenant un module émetteur permettant des transmissions par le biais de technologies LPWAN.

L'unité de transmission 40 peut être configurée pour effectuer une transmission via un réseau LPWAN en fonction de critères prédéterminés, ou à chaque fois que l'unité de transmission 40 reçoit des données en provenance de l'unité de traitement 30.

La batterie 20 du capteur de surveillance peut comprendre une ou plusieurs piles non rechargeables montées en série, ou être rechargeable par un chargeur. Plus particulièrement, la batterie 20 du capteur de surveillance peut être une batterie 20 standard, telle qu'un pack batterie 3.6V, ou peut comprendre une pile lithium-ion. Une telle pile lithium-ion présente une haute autonomie, par exemple de plusieurs mois, voire supérieure à une année, voire de l'ordre de 2 ou 3 ans. Ainsi, avec une batterie 20 standard ou lithium-ion, le capteur de surveillance peut acquérir les mesures de vibrations et assurer leur transmission au serveur distant pendant une durée longue, qui peut être supérieure à une année, sans nécessiter de remplacement ou de recharge de sa batterie 20, donc en limitant le nombre d'opérations de maintenance et les coûts associés.

Le capteur vibratoire 10 peut comprendre un accéléromètre mono-axe ou multiaxes, par exemple un accéléromètre tri-axes. Les mesures de vibrations peuvent correspondre à des mesures d'accélération et/ou d'amplitude de vitesse. Dans le cas d'un accéléromètre multiaxes, chaque axe peut être traité indépendamment. Plus particulièrement, le capteur vibratoire 10 peut comprendre un accéléromètre numérique de type MEMS 16 bits, adapté pour relever les vibrations sur trois axes. Un tel accéléromètre MEMS est simple d'utilisation et consomme moins d'énergie qu'un capteur de type piézoélectrique. En outre, l'accéléromètre MEMS permet de fournir un signal numérique, donc déjà prétraité. L'échantillonnage et le traitement de l'information, notamment du fait de la division de la plage de fréquence de fonctionnement en plusieurs sous-plages de fréquence, est compatible de l'utilisation d'un tel accéléromètre MEMS. L'accéléromètre MEMS peut en particulier permettre d'obtenir des mesures d'accélération par tiers d'octave, et est donc compatible d'une division de la plage de fréquence de fonctionnement par tiers d'octave. La durée d'intégration des mesures de l'accéléromètre MEMS est typiquement inférieure à 5 secondes, ce qui est compatible de la surveillance continue des vibrations.

Le capteur vibratoire, tel que l'accéléromètre MEMS, peut être adapté pour mesurer avec précision les vibrations dans un spectre de fréquence correspondant sensiblement à la plage de fréquence de fonctionnement, par exemple dans un spectre de fréquence allant de 1 Hz à 500 Hz.

Le capteur vibratoire 10, en particulier l'accéléromètre, peut être adapté pour mesurer les vibrations avec un niveau de bruit faible en rapport avec les seuils vibratoires définis. La fréquence d'échantillonnage du capteur vibratoire 10, c'est-à-dire le nombre de mesures effectuées par seconde par le capteur vibratoire 10, peut aller jusqu'à 6kHz pour effectuer des traitements sans perturber les mesures. La résolution de la mesure de vitesse peut être de l'ordre de 0,1 µm/s. Un tel capteur vibratoire 10 permet de fournir des mesures de vibrations fiables, non perturbées par le fonctionnement du capteur vibratoire 10, et ce sur l'ensemble de la plage de fréquence de fonctionnement.

Le capteur vibratoire 10 offre de hautes prestations et une fiabilité optimale avec un encombrement réduit. Le capteur vibratoire 10 ne nécessite aucune connexion externe. Sa pose est particulièrement simple grâce aux différents accessoires, tels qu'un gabarit de pose, des chevilles, des vis, et les options (butée, colle).

Le capteur de surveillance peut comprendre en outre un boîtier 100 en polycarbonate étanche. Le capteur vibratoire 10, la batterie 20, l'unité de traitement 30 et/ou l'unité de transmission 40 sont intégrées dans le boîtier 100. Le boîtier permet de protéger l'électronique du dispositif des perturbations extérieures courantes aux abords d'une zone d'opérations telle qu'un chantier de construction, par exemple de l'eau et de la poussière. La fiabilité des mesures est accrue et la maintenance sur le capteur de surveillance est encore diminuée en préservant la durée de vie de ses composants.

Plus précisément, le boîtier 100 peut être un boitier en polycarbonate étanche IP65. Le boîtier 100 est alors protégé contre les jets d'eau de toutes directions à la lance et totalement protégé contre les poussières. Les dimensions du boîtier 100 peuvent être de 12,5 cm x 8 cm x 5,5 cm. Le boîtier 100 peut peser entre 200 et 400 grammes, par exemple 280 grammes.

Le capteur de surveillance peut comprendre en outre des moyens de stockage adaptés pour stocker, par le biais d'un logiciel embarqué dans le capteur et par exemple sous la forme d'un ou plusieurs fichiers, des mesures de vibrations et/ou des données vibratoires et/ou des données d'alerte, et pour récupérer ces données en vue de leur traitement ultérieur.

Les moyens de stockage peuvent être adaptés pour enregistrer le contenu des messages à transmettre lors des étapes E4 et E6, dans le cas par exemple où le réseau LPWAN n'est pas disponible et où les données vibratoires et/ou d'alerte ne peuvent donc pas être instantanément transmises. Les moyens de stockage peuvent être adaptés pour enregistrer, par exemple dans un fichier CSV de stockage, une certaine durée de toutes les données de mesures du capteur vibratoire 10 lorsque le capteur de surveillance détecte un événement vibratoire. Par exemple, les moyens de stockage peuvent enregistrer 30 secondes de toutes les données des trois axes de l'accéléromètre lorsque le capteur vibratoire 10 est un accéléromètre et détecte un événement vibratoire. Les moyens de stockage peuvent en outre être adaptés pour récupérer le contenu des messages à transmettre et/ou les données de mesures enregistrées, en vue d'un traitement ultérieur.

Les moyens de stockage peuvent comprendre une carte électronique dédiée, telle qu'une carte mémoire de type SD. Une carte électronique dédiée consomme moins d'énergie qu'un PC ou qu'un géophone, ce qui permet de préserver l'autonomie du capteur de surveillance. La carte électronique est utilisée comme un buffer tournant. Une fois la carte électronique pleine, les fichiers contenant les messages à transmettre et/ou les données de mesures enregistrées qui sont les plus anciens peuvent être supprimés. L'espace de stockage de la carte électronique est ainsi libéré en fonction de l'ancienneté des fichiers qui y sont stockés.

Dans un premier mode de réalisation, les fichiers de données peuvent être récupérés en accédant physiquement aux moyens de stockage, par exemple en ouvrant un couvercle du boîtier 100 du capteur de surveillance, puis en recopiant le contenu des moyens de stockage et en les remettant ensuite en place, ou en les remplaçant par de nouveaux moyens de stockage. Dans un deuxième mode de réalisation, les fichiers de données peuvent être récupérés en les transmettant à un module externe par une connexion à distance, par exemple par le biais d'une connexion Bluetooth.

Un système de surveillance de vibrations produites par une zone d'opérations peut comprendre un capteur de surveillance de vibrations tel que décrit ci-dessus et un serveur distant 200.

Le serveur distant 200 est adapté pour traiter, par exemple en temps réel, les données vibratoires et les alertes reçues.

Le serveur distant 200 est adapté pour entreprendre certaines actions, en fonction des données transmises lors des étapes de transmission E4, E6. Les actions entreprises peuvent comprendre l'envoi d'alertes à l'utilisateur et/ou l'affichage de données, telles que les données vibratoires ou les données d'alertes, etc.

Par exemple, l'affichage de données peut être réalisé par le biais d'une plateforme internet comprenant un tableau de bord pour afficher les données vibratoires et/ou les données d'alerte.

Le système de surveillance de vibrations peut comprendre des moyens de signalement comprenant un terminal mobile configuré pour transmettre un signalement d'un évènement vibratoire par un utilisateur du terminal mobile lorsque l'utilisateur se trouve à une distance inférieure à un seuil donné de la zone d'opérations.

Le système de surveillance de vibrations peut comprendre en outre des moyens de notification configurés pour notifier un évènement vibratoire lorsque le capteur de surveillance de vibrations détecte un évènement vibratoire, et/ou lorsque les moyens de signalement transmettent un signalement d'un évènement vibratoire.

D'autres modes de réalisation peuvent être envisagés et une personne du métier peut facilement modifier les modes ou exemples de réalisation exposés ci-dessus ou en envisager d'autres tout en restant dans la portée de l'invention, qui est définie par les revendications.

## Revendications

1. Procédé de surveillance de vibrations produites par une zone d'opérations, le procédé étant mis en œuvre au moyen d'un capteur de surveillance de vibrations comprenant un capteur vibratoire (10), une batterie (20), une unité de traitement (30) et une unité de transmission (40) de technologie longue portée basse consommation de type LPWAN, Low-Power Wide Area Network, ladite unité de transmission (40) comprenant un module émetteur permettant des transmissions par le biais d'un réseau LPWAN, le procédé comprenant les étapes suivantes :
E1: division d'une plage de fréquence de fonctionnement en plusieurs sous-plages de fréquence ;
E2: pour chaque sous-plage de fréquence, définition d'un seuil vibratoire associé ;
E3: acquisition en continu de mesures de vibrations produites par la zone d'opérations, au moyen du capteur vibratoire (10) ;
E4: transmission périodique, à une période d'envoi (Tenvoi), de données vibratoires issues des mesures de vibrations, les données vibratoires étant transmises à un serveur distant (200) via le réseau LPWAN, au moyen de l'unité de transmission (4) ;
E5: détection d'un événement vibratoire correspondant à au moins un dépassement d'un seuil vibratoire dans la sous-plage de fréquence associée, au moyen de l'unité de traitement (30) ;
E6: lorsqu'un événement vibratoire est détecté, transmission d'une alerte au serveur distant (200) via le réseau LPWAN, au moyen de l'unité de transmission (4), le procédé de surveillance de vibrations étant **caractérisé en ce que** le réseau LPWAN est un réseau LPWAN de type LoRaWan, SigFox ou narrowband-IOT, et **en ce que** l'alerte est transmise périodiquement, à chaque période d'alerte (Talerte), la période d'alerte (Talerte) étant plus courte que la période d'envoi (Tenvoi).

2. Procédé de surveillance de vibrations selon la revendication 1, dans lequel la division de la plage de fréquence de fonctionnement en plusieurs sous-plages de fréquences est réalisée par tiers d'octave.

3. Procédé de surveillance de vibrations selon la revendication 1 ou la revendication 2, dans lequel les sous-plages de fréquence présentent des longueurs d'intervalle différentes les unes des autres.

4. Procédé de surveillance de vibrations selon l'une des revendications 1 à 3, comprenant en outre une étape d'intégration (E30), sur au moins une période d'intégration (Tintégration), des mesures de vibrations acquises lors de l'étape d'acquisition E3, l'au moins une période d'intégration (Tintégration) étant plus courte que la période d'envoi (Tenvoi), dans lequel les données vibratoires transmises lors de l'étape E4 correspondent à un ensemble des mesures de vibrations intégrées pendant la période d'envoi (Tenvoi).

5. Procédé de surveillance de vibrations selon l'une quelconque des revendications 1 à 4, dans lequel l'étape de transmission d'une alerte E6 comprend la transmission de données d'alerte, les données d'alerte comprenant la fréquence pour laquelle le seuil vibratoire a été dépassé, une donnée vibratoire d'alerte, et une durée de dépassement du seuil vibratoire.

6. Procédé de surveillance de vibrations selon l'une des revendications 1 à 5, comprenant en outre les étapes suivantes :
E7: acquisition en continu de mesures sonores produites par une zone d'opérations ;
E8: détection d'un événement sonore correspondant à une signature sonore prédéterminée ;
E9: corrélation d'un événement vibratoire détecté avec un événement sonore détecté.

7. Capteur de surveillance de vibrations produites par une zone d'opérations adapté pour mettre en œuvre un procédé selon l'une des revendications 1 à 6, le capteur de surveillance comprenant :
- un capteur vibratoire (10) adapté pour acquérir en continu des mesures de vibrations produites par une zone d'opérations ;
- une batterie (20) ;
- une unité de traitement (30) adaptée pour déterminer des données vibratoires à partir des mesures de vibrations, et pour détecter un événement vibratoire correspondant à un dépassement d'un seuil vibratoire défini dans une plage de fréquence associée ; et
- une unité de transmission (40) de technologie longue portée basse consommation de type LPWAN, Low-Power Wide Area Network, ladite unité de transmission (40) comprenant un module émetteur permettant des transmissions par le biais d'un réseau LPWAN de type LoRaWan, SigFox ou narrowband-IOT, ladite unité de transmission (40) étant adaptée pour transmettre des données à un serveur distant (200) via le réseau LPWAN.

8. Capteur de surveillance de vibrations selon la revendication 7, dans lequel le capteur vibratoire (10) comprend un accéléromètre tri-axes et dans lequel la batterie (20) comprend une pile lithium-ion.

9. Capteur de surveillance de vibrations selon l'une des revendications 7 ou 8, comprenant en outre un boîtier (100) en polycarbonate étanche, dans lequel le capteur vibratoire (10), la batterie (20), l'unité de traitement (30) et l'unité de transmission (40) sont intégrées dans le boîtier.

10. Système de surveillance de vibrations produites par une zone d'opérations, comprenant un capteur de surveillance de vibrations selon l'une des revendications 7 à 9, et un serveur distant.

11. Système de surveillance de vibrations produites par une zone d'opérations selon la revendication 10, comprenant en outre des moyens de signalement comprenant un terminal mobile configuré pour transmettre un signalement d'un évènement vibratoire par un utilisateur du terminal mobile lorsque l'utilisateur se trouve à une distance inférieure à un seuil donné de la zone d'opérations.

12. Système de surveillance de vibrations produites par une zone d'opérations selon la revendication 11, comprenant en outre des moyens de notification configurés pour notifier un évènement vibratoire lorsque le capteur de surveillance de vibrations détecte un évènement vibratoire, et/ou lorsque les moyens de signalement transmettent un signalement d'un évènement vibratoire.

## Patentansprüche

1. Verfahren zur Überwachung von Schwingungen, die von einem Arbeitsbereich erzeugt werden, wobei das Verfahren mittels eines Sensors zur Überwachung von Schwingungen durchgeführt wird, der einen Schwingungssensor (10), eine Batterie (20), eine Verarbeitungseinheit (30) und eine Übertragungseinheit (40) mit Technologie mit großer Reichweite und niedrigem Verbrauch vom Typ LPWAN, Low-Power Wide Area Network, umfasst, wobei die Übertragungseinheit (40) ein Sendemodul umfasst, das Übertragungen über ein LPWAN-Netzwerk ermöglicht, wobei das Verfahren die folgenden Schritte umfasst:
E1: Aufteilen eines Betriebsfrequenzbereichs in mehrere Frequenzunterbereiche;
E2: Definieren, für jeden Frequenzunterbereich, eines zugehörigen Schwingungsschwellenwerts;
E3: kontinuierliches Erfassen von Messungen von Schwingungen, die vom Arbeitsbereich erzeugt werden, mittels des Schwingungssensors (10);
E4: periodisches Übertragen von Schwingungsdaten, die aus den Schwingungsmessungen hervorgegangen sind, in einer Sendeperiode (Tenvoi), wobei die Schwingungsdaten über das LPWAN-Netzwerk mittels der Übertragungseinheit (4) an einen Remote-Server (200) übertragen werden;
E5: Erkennen eines Schwingungsereignisses, das mindestens einer Überschreitung eines Schwingungsschwellenwerts im zugehörigen Frequenzunterbereich entspricht, mittels der Verarbeitungseinheit (30);
E6: Übertragen, bei Erkennung eines Schwingungsereignisses, einer Warnung an den Remote-Server (200) über das LPWAN-Netzwerk mittels der Übertragungseinheit (4),
wobei das Verfahren zur Überwachung von Schwingungen **dadurch gekennzeichnet ist, dass** das LPWAN-Netzwerk ein LPWAN-Netzwerk vom Typ LoRaWan, SigFox oder Narrowband-IOT ist, und dass die Warnung in jeder Warnperiode (Talerte) periodisch übertragen wird, wobei die Warnperiode (Talerte) kürzer ist als die Sendeperiode (Tenvoi).

2. Verfahren zur Überwachung von Schwingungen nach Anspruch 1, wobei die Aufteilung des Betriebsfrequenzbereichs in mehrere Frequenzunterbereiche in Terz-Schritten erfolgt.

3. Verfahren zur Überwachung von Schwingungen nach Anspruch 1 oder Anspruch 2, wobei die Frequenzunterbereiche voneinander unterschiedliche Intervalllängen aufweisen.

4. Verfahren zur Überwachung von Schwingungen nach einem der Ansprüche 1 bis 3, das ferner über mindestens eine Integrationsperiode (Tintegration) einen Integrationsschritt (E30) der im Erfassungsschritt E3 erfassten Schwingungsmessungen umfasst, wobei die mindestens eine Integrationsperiode (Tintegration) kürzer ist als die Sendeperiode (Tenvoi), wobei die in Schritt E4 übertragenen Schwingungsdaten einer während der Sendeperiode (Tenvoi) integrierten Gruppe von Schwingungsmessungen entsprechen.

5. Verfahren zur Überwachung von Schwingungen nach einem der Ansprüche 1 bis 4, wobei der Übertragungsschritt einer Warnung E6 die Übertragung von Warnungsdaten umfasst, wobei die Warnungsdaten die Frequenz, für die der Schwingungsschwellenwert überschritten wurde, einen Schwingungswarnungsdatenwert und eine Dauer der Überschreitung des Schwingungsschwellenwerts umfassen.

6. Verfahren zur Überwachung von Schwingungen nach einem der Ansprüche 1 bis 5, das ferner die folgenden Schritte umfasst:
E7: kontinuierliches Erfassen von Messungen von Schall, der von einem Arbeitsbereich erzeugt wird;
E8: Erkennen eines Schallereignisses, das einer vorgegebenen Schallsignatur entspricht;
E9: Korrelieren eines erkannten Schwingungsereignisses mit einem erkannten Schallereignis.

7. Sensor zur Überwachung von Schwingungen, die von einem Arbeitsbereich erzeugt werden, der zur Durchführung eines Verfahrens nach einem der Ansprüche 1 bis 6 geeignet ist, wobei der Überwachungssensor umfasst:
- einen Schwingungssensor (10), der zum kontinuierlichen Erfassen der Messungen von Schwingungen geeignet ist, die von einem Arbeitsbereich erzeugt werden;
- eine Batterie (20);
- eine Verarbeitungseinheit (30), die zum Bestimmen der Schwingungsdaten aus den Schwingungsmessungen und zum Erkennen eines Schwingungsereignisses geeignet ist, das einer Überschreitung eines in einem zugehörigen Frequenzbereich definierten Schwingungsschwellwerts entspricht; und
- eine Übertragungseinheit (40) mit Technologie mit großer Reichweite und niedrigem Verbrauch vom Typ LPWAN, Low-Power Wide Area Network, wobei die Übertragungseinheit (40) ein Sendemodul umfasst, das Übertragungen über ein LPWAN-Netzwerk vom Typ LoRaWan, SigFox oder Narrowband-IOT ermöglicht, wobei die Übertragungseinheit (40) geeignet ist, Daten über das LPWAN-Netzwerk an einen Remote-Server (200) zu übertragen.

8. Sensor zur Überwachung von Schwingungen nach Anspruch 7, wobei der Schwingungssensor (10) einen dreiachsigen Beschleunigungsmesser umfasst und wobei die Batterie (20) eine Lithium-Ionen-Zelle umfasst.

9. Sensor zur Überwachung von Schwingungen nach einem der Ansprüche 7 oder 8, der ferner ein dichtes Polycarbonatgehäuse (100) umfasst, wobei der Schwingungssensor (10), die Batterie (20), die Verarbeitungseinheit (30) und die Übertragungseinheit (40) in dem Gehäuse integriert sind.

10. System zur Überwachung von Schwingungen, die von einem Arbeitsbereich erzeugt werden, das einen Sensor zur Überwachung von Schwingungen nach einem der Ansprüche 7 bis 9 und einen Remote-Server umfasst.

11. System zur Überwachung von Schwingungen, die von einem Arbeitsbereich erzeugt werden, nach Anspruch 10, das ferner Meldemittel umfasst, die ein mobiles Endgerät umfassen, das zum Übertragen einer Meldung über eine Schwingungsereignis durch einen Benutzer des mobilen Endgeräts ausgelegt ist, wenn sich der Benutzer in einer Entfernung von weniger als einem vorgegebenen Schwellenwert vom Arbeitsbereich befindet.

12. System zur Überwachung von Schwingungen, die von einem Arbeitsbereich erzeugt werden, nach Anspruch 11, das ferner Benachrichtigungsmittel umfasst, die zum Benachrichtigen über ein Schwingungsereignis ausgelegt sind, wenn der Sensor zur Überwachung von Schwingungen ein Schwingungsereignis erkennt und/oder wenn die Meldemittel eine Meldung eines Schwingungsereignisses übertragen.

## Claims

1. A method for monitoring vibrations produced by an area of operations, the method being implemented by means of a vibration monitoring sensor comprising a vibration sensor (10), a battery (20), a processing unit (30) and a transmission unit (40) of long-range low-consumption technology of the Low-Power Wide Area Network, LPWAN type, said transmission unit (40) comprising a transmitter module allowing transmissions via an LPWAN network, the method comprising the following steps:
E1: dividing an operating frequency range into several frequency sub-ranges;
E2: for each frequency sub-range, defining an associated vibration threshold;
E3: continuously acquiring measurements of vibrations being produced by the area of operations, by means of the vibration sensor (10);
E4: periodically transmitting, at a sending period (Tenvoi), vibration data from the vibration measurements, the vibration data being transmitted to a remote server (200) via the LPWAN network, by means of the transmission unit (4);
E5: detecting a vibration event corresponding to at least one exceedance of a vibration threshold in the associated frequency sub-range, by means of the processing unit (30);
(E6): when a vibration event is detected, transmitting an alert to the remote server (200) via the LPWAN network, by means of the transmission unit (4),
the method for monitoring vibrations being **characterized in that** the LPWAN network is a network of the LoRaWan, SigFox or narrowband-loT type, and **in that** the alert is transmitted periodically, at each alert period (Talerte), the alert period (Talerte) being shorter than the sending period (Tenvoi).

2. The vibration monitoring method according to claim 1, wherein the division of the operating frequency range into several frequency sub-ranges is carried out per onethird octave.

3. The vibration monitoring method according to claim 1 or 2, wherein the frequency sub-ranges have interval lengths different from each other.

4. The vibration monitoring method according to any of claims 1 to 3, further comprising a step (E30) of integrating, over at least one integration period (Tintégration), the vibration measurements acquired during the acquisition step E3, the at least one integration period (Tintégration) being shorter than the sending period (Tenvoi), wherein the vibration data transmitted during step E4 correspond to a set of the vibration measurements integrated during the sending period (Tenvoi).

5. The vibration monitoring method according to any one of claims 1 to 4, wherein the step E6 of transmitting an alert comprises the transmission of alert data, the alert data comprising the frequency for which the vibration threshold has been exceeded, an alert vibration data and a vibration threshold exceedance duration.

6. The vibration monitoring method according to any one of claims 1 to 5, further comprising the following steps:
E7: continuously acquiring noise measurements produced by an area of operations;
E8: detecting a noise event corresponding to a predetermined noise signature;
E9: correlating a detected vibration event with a detected noise event.

7. A sensor for monitoring vibrations produced by an area of operations adapted to implement a method according to any of claims 1 to 6, the monitoring sensor comprising:
- a vibration sensor (10) adapted to continuously acquire measurements of vibrations produced by an area of operations;
- a battery (20);
- a processing unit (30) adapted to determine vibration data from the vibration measurements, and to detect a vibration event corresponding to an exceedance of a vibration threshold defined in an associated frequency range; and
- a transmission unit (40) of long-range low-consumption technology of the LPWAN, Low-Power Wide Area Network, type, said transmission unit (40) comprising a transmitter module allowing transmissions via an LPWAN network of the LoRaWan, SigFox or narrowband-loT type, said transmission unit (40) being adapted to transmit data to a remote server (200) via the LPWAN network.

8. The vibration monitoring sensor according to claim 7, wherein the vibration sensor (10) comprises a tri-axis accelerometer and wherein the battery (20) comprises a lithium-ion cell.

9. The vibration monitoring sensor according to any of claims 7 or 8, further comprising a sealed polycarbonate casing (100), wherein the vibration sensor (10), the battery (20), the processing unit (30) and the transmission unit (40) are integrated into the casing.

10. A system for monitoring vibrations produced by an area of operations, comprising a vibration monitoring sensor according to any of claims 7 to 9, and a remote server.

11. The system for monitoring vibrations produced by an area of operations according to claim 10, further comprising reporting means comprising a mobile terminal configured to transmit a reporting of a vibration event by a user of the mobile terminal when the user is at a distance below a given threshold from the area of operations.

12. The system for monitoring vibrations produced by an area of operations according to claim 11, further comprising notification means configured to notify a vibration event when the vibration monitoring sensor detects a vibration event, and/or when the reporting means transmit a reporting of a vibration event.
